# EUROPEAN PATENT SPECIFICATION

(11) **EP 0 438 037 B1**
(45) Date of publication and mention of the grant of the patent: **30.03.1994**
(21) Application number: 90850024.2
(22) Date of filing: 19.01.1990
(51) Int. Cl.: F24F 3/147

(54) **Ventilation apparatus for ventilating a limited space within a building**
Belüftungseinrichtung für die Belüftung eines begrenzten Raums innerhalb eines Gebäudes
Appareil de ventilation pour ventiler un espace limité dans un bâtiment

(43) Date of publication of application: 24.07.1991
(73) Proprietor: Bergman, Kurt Tage Lennart, S-852 46 Sundsvall (SE)
(72) Inventor: Bergman, Kurt Tage Lennart, S-852 46 Sundsvall (SE)
(74) Representative: Zetterström, Alf

(56) References cited:
- DE-A- 3 224 277
- DE-A- 3 613 942
- US-A- 2 011 117

## Description

In the past, forced ventilation of various spaces within a building has been effected practically exclusively by means of central ventilation plants, consisting of a central ventilation apparatus and mutually separate air conveying ducts, connected thereto, for continuously delivering supply air to and continuously drawing off exhaust air from various spaces within the building.

However, in practice, these central ventilation plants have proved to have a series of disadvantages. Especially, it could be mentioned that it is not possible to maintain a proper pressure balance between spaces in a building, ventilated by means of such a plant, and the ambient atmosphere for more than possibly a very short time upon each trimming of the plant. If an expensive and time-consuming trimming of the plant is not performed at very short intervals, pressure unbalance conditions will occur, causing an air leakage through various building portions, for instance through the joints between floors and walls. This air leakage is assumed to be one of the main reasons for the formation of condensate and the growth of mould, following in the long run, frequently occuring in modern houses with central ventilation.

Another disadvantage of central ventilation plants is that the very long air conveying ducts required for these plants give reason to an electrostatic breakdown of ions in the ventilation air, resulting in that, in the ventilated spaces, one will get a feeling of a defective freshness of the delivered supply air. Additionally, the high pressure drops in the long air conveying ducts cause high energy losses, resulting in that the total efficiency of the plants becomes very low.

The present invention is based on the thought that the abovementioned disadvantages, attached to central ventilation plants, could most easily be avoided by abstaining from using such plants and instead effecting the required ventilation in a building by means of a plurality of separate local ventilation apparatuses, placed at different locations within the building, so that each apparatus may effect a local ventilation of an appurtenant limited space within the building. The invention therefore aims at providing a ventilation apparatus suited for such a local ventilation.

More particularly, the invention relates to a ventilation apparatus for ventilating a limited space within a building by alternately forcedly drawing off a stream of exhaust air from and forcedly delivering a stream of supply air to said space through a conveying duct, common to both air streams and containing a regenerative heat exchanger for absorbing thermal energy from one air stream and emitting thermal energy to the other air stream, said ventilation apparatus being arranged to operate in a time-controlled cyclic manner in short consecutive operating cycles, each comprising a first period for drawing off exhaust air from said space and a second period for delivering supply air to said space.

A ventilation apparatus of said kind is previously known through SE-B 444 849. However, this known apparatus is not intended to provide a proper pressure balance between the space ventilated thereby and the ambient atmosphere. Instead, it is expressively stated that said apparatus must operate in such a manner as to cause a resultant excess or deficit or air in the appurtenant space, in order hereby to give reason to a continuous unidirectional flow of air between said space and another space, wherein a resultant deficit or excess, respectively, of air is obtained in a corresponding manner by means of a ventilation apparatus belonging to said space. This manner of operation of the known apparatus unavoidably results in a great risk of condensate formation and mould growth in the ventilated space as a consequence of the lasting pressure unbalance between said space and the ambient atmosphere.

Another disadvantage of the ventilation apparatus disclosed in SE-B 444 849 is that the degree of ventilation will vary strongly between various portions of the space ventilated thereby, since the apparatus does not cause any substantial air circulation within said space.

Through US-A 4 589 476 another ventilation apparatus of the kind above specified is previously known, said ventilation apparatus comprising two fans, which are arranged each to generate one of said two air streams, and flap valve means for bringing the common conveying duct to communicate with the ventilated space alternately via a separate suction opening for exhaust air and a separate injection opening for supply air, said two openings being directed in mutually diverging directions. On a superficial view this known apparatus, which constitutes a combined ventilation apparatus and air cleaning apparatus, may be seen to be capable of providing not only a more uniform ventilation of the ventilated space as a consequence of its use of a separate suction opening and a separate injection opening, but also an improved pressure balance between said space ant the ambient atmosphere as a consequence of its use of two separate fans, instead of one single fan, for generating the two different air streams.

However, when considering this known apparatus more in detail, it will be clear that said apparatus does not permit a lasting pressure balance to be maintained between the ventilated space and the ambient atmosphere. The main reason for this is that the two fans are turned with mutually different sides towards the heat exchanger. This means that, even if, in some way, a proper pressure balance may be set initially in connection with the installation of the apparatus, it will not be possible to maintain said pressure balance in the long run when the air passages in the heat exchanger are gradually clogged by dust particles, since the difference between the suction capacity and the blowing capacity of the fans will result in that the pressure drop caused by the heat exchanger will not only differ between the two air streams already from the beginning but will be changed at mutually different rates for the different air streams when clogging occurs.

In addition to the above disadvantage, the known apparatus also has another substantial disadvantage, which consists in that, as a consequence of the disposition of both fans on one and the same side of the heat exchanger, a complicated and expensive control mechanism is required for operating the valve means.

The invention has for its purpose to provide an improved ventilation apparatus of the kind set forth in the preamble of claim 1 and previously known through US-A 4 589 476, which makes it possible to maintain a lasting and proper pressure balance between the ventilated space and the ambient atmosphere and hereby to avoid the risk of condensate formation and mould growth in said space.

In accordance with the invention, for this purpose, there is provided a ventilation apparatus of said kind, characterized in that, in order to enable the ventilation apparatus, during each operating cycle, to deliver to said space an amount of supply air, corresponding to the amount of exhaust air drawn off from the space during the same operating cycle, said two fans consist of two alternately operating mutually equal drum fans, said fans being placed each on one side of said heat exchanger with their suction sides turned towards the common conveying duct, and in that said flap valve means are controlled by at least one of said two air streams.

Preferably, each operating cycle may have a length of about 0.5 to about 2 minutes, preferably 1 minute. Such a short length of the operating cycle means that the pressure in the ventilated space will not vary substantially during an operating cycle.

In order to have a very high efficiency, the regenerative heat exchanger should suitably include means having a high moisture absorbtion capacity, which may absorb moisture from one air stream and emit moisture to the other air stream.

Furthermore, the apparatus may advantageously include means for controllably heating the supply air stream, placed after the heat exchanger as seen in the direction of flow of the supply air stream. An especially favourable air circulation in the ventilated space is then obtained if the suction opening for exhaust air is directed in a generally upward and forward direction, while the injection opening for supply air is directed in a generally downward and forward direction.

The common air conveying duct may advantageously be provided with an access opening to the interior of said duct, located in a wall thereof and normally closed by means of a door. Hereby access may easily be obtained to the heat exchanger and other means, such as filters, provided within said duct. In order to facilitate a regular cleaning as well as any required exchange of the means provided within the common conveying duct, at least some of said means may suitably be mounted easily detachable within said duct and arranged to permit removal of them through said access opening, which preferably may be located in the front side of the apparatus.

Below the invention is further described with reference to the accompanying diagrammatic drawing, in which:-
Figure 1 shows a perspective view, seen in an inclined direction from the front and above, of a ventilation apparatus according to an embodiment of the invention, selected by way of example, the apparatus being shown in a position at a short distance in front of a wall mounting therefore, while
Figure 2 shows a side elevation, in cross-section, of said apparatus, illustrating it attached to said wall mounting.

The ventilation apparatus shown in the drawing and generally designated 10 has a body in the shape of a box-like casing 11, containing a vertically extending air conveying duct 12 of generally rectangular cross-section, two fans 13 and 14, located each at one end of said duct, two units 15 and 16, placed between said fans and serving as filters and moisture and heat accumulating means and together forming a regenerative heat exchanger, and an electric heating loop 17, located below said units. In the illustrated case, the two units 15 and 16 are formed as rectangular plate-like members which are provided with a very large number of air-flow through passages, permitting air to pass in an approximately vertical direction through each of said two units.

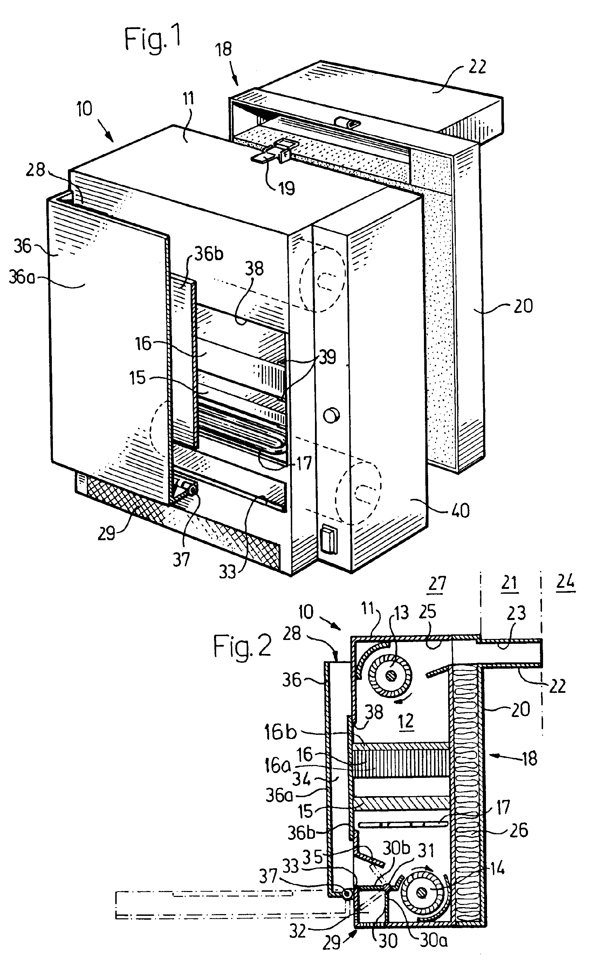

Reference numeral 18 generally designates a wall mounting for apparatus 10, to which said apparatus may be releasably attached by means of suitable clamping means 19. Wall mounting 18 has a rectangular forwardly open box-like body 20 which may be mounted in a projecting or recessed state at the inner side of an outer wall 21 (Figure 2) of a building. At its rear side, wall mounting 18 is provided with a piece of pipe 22 of rectangular cross-section, projecting in a rearward direction from the upper portion of body 20 and forming a lead-through air duct 23, through which duct 12 of apparatus 10 may communicate with the ambient atmosphere 24 via an opening 25, provided in the upper portion of the rear wall of casing 11 and located in front of duct 23. Except for its portion located in front of duct 23, the cavity formed by body 20 is filled by an insert 26, consisting of a heat insulating material.

At its lower end, duct 12 is arranged to communicate with the space 27 located inside wall 21 alternately via an opening 28 and an opening 29. Opening 28 constitutes a suction opening for exhaust air, through which apparatus 10 may suck out exhaust air from the ventilated space 27, while opening 29 forms an injection opening for supply air, through which the apparatus may blow supply air into said space.

In order to make it possible alternately to draw off a stream of exhaust air from and to deliver a stream of supply air to space 27, the two fans 13 and 14 are arranged to operate alternatingly. In the illustrated case, the fans are assumed to consist of two mutually equal drum fans, having their suction sides turned towards duct 12, which serves as a common conveying duct for both said air streams. Fan 13 then serves to generate said exhaust air stream, while fan 14 serves to generate the supply air stream.

Reference numeral 30 designates a flap valve member having two valve flaps 30a and 30b, which project in directions approximately perpendicular to each other from a common horizontal supporting shaft 31. This valve member 30 extends in the transversal direction of casing 11 between opposite side walls of said casing and is pivotally mounted in said side walls by means of shaft 31 for pivoting movement between a rest position, shown in full lines in Figure 2 and which the valve member normally tends to assume under the action of gravity, and an alternative position, shown in dash-dotted lines in Figure 2 and to which the valve member is arranged to be moved automatically when fan 14 is started, due to the action of the force then applied on valve flap 30a by the supply air stream generated by said fan.

In said alternative position, valve flap 30a uncovers a passage 32 for the supply air stream from the compression side of fan 14 to injection opening 29, previously closed by said valve flap when in its vertical rest position, said injection opening being formed by a latticed opening in the lower portion of the front wall of casing 11 and an adjacent latticed opening in the front portion of the lower wall of casing 11. Valve flap 30a then extends in an inclined downward and forward direction towards a portion of the front wall of the casing located above opening 29 and acts as a guide vane for the supply air stream which guarantees that said air stream will be blown in an inclined downward and forward direction into the ventilated space 27 through opening 29.

In the rest position, the other valve flap of valve member 30, namely valve flap 30b, extends in an approximately horizontal forward direction from shaft 31 to the portion of the front wall of casing 11 located on level with said shaft, whereby it uncovers a connection between duct 12 and suction opening 28, which is directed in an inclined upward and forward direction, via an opening 33 in the front wall of casing 11 and a connection duct 34, extending in a vertical direction between the two openings 28 and 33. Simultaneously, flap 30b cuts off duct 12 from communication with injection opening 29. Valve flap 30b assumes this rest position both when the apparatus is taken out of operation and when fan 13 is started to suck out a stream of exhaust air from space 27. When, instead, fan 14 is started and valve member 30 moved to its position shown in dash-dotted lines, valve flap 30b will cooperate with a fixed shield wall 35, located above the same, and cut off duct 12 from communication with opening 33.

The connection duct 34 is formed within a front door 36, at its lower end pivotally connected to the front portion of casing 11 for pivoting movement in relation thereto around a horizontal transversal axes 37. This front door has a higher front wall 36a and a lower rear wall 36b, which, when the front door is located in its normal position shown in full lines in Figure 2, closes an opening 38 in the front wall of casing 11, located in front of the two units 15 and 16. From this position, in which front door 36 may be releasably locked by means of any suitable locking means, it may be manually swung in a forward direction around axes 37 to an approximately horizontal position, shown in dash-dotted lines, in which it uncovers opening 38 and permits access to the interior of duct 12 there-through.

The two units 15 and 16 are formed as insert units which are easily insertable into and removable from duct 12 through opening 38 and which may be supported within duct 12 upon support rails 39 secured to the side walls of said duct. Hereby said units may easily be removed for cleaning them, for instance by means of a vacuum cleaner. The access to duct 12 offered by opening 38 also makes it possible to clean the walls of said duct and heating loop 17 in an easy manner.

The manner of operation of apparatus 10 will now be briefly described.

The apparatus is arranged to operate in a time-controlled cyclic manner in consecutive operating cycles of mutually equal length. Each operating cycle comprises a first period, during which fan 13 is switched on to draw off a stream of exhaust air from space 27 to the ambient atmosphere. During its passage through duct 12, this exhaust air stream will emit heat and moisture to units 15 and 16, which serve as a regenerative heat exchanger and of which unit 15 may consist of a number of metal lattices, stacked upon each other and together forming a genuine heat accumulator having a high heat storage capacity, while unit 16 may consist of a lower moisture absorbing portion 16a, preferably of a hygroscopic material, and a filter portion 16b, located above the firstmentioned portion. However, in practice, the detailed structure of said units may be varied in many different ways. For instance, instead of two separate units, it is possible to utilize a single unit in which all desired functions are amalgamated.

In addition to the abovementioned period, during which heating loop 17 should be disconnected, each operating cycle also comprises a subsequent second period, during which fan 14 is switched on to inject a stream of supply air into space 27. During its passage through units 15 and 16, the supply air stream sucked into apparatus 10 from the ambient atmosphere will absorb moisture and heat from said units and hereby become preheated. By means of heating loop 17 said air stream may also be further heated in order to have a suitable temperature when blown into space 27 through opening 29.

The two abovementioned periods within each operating cycle should have such lengths as to cause the amount of exhaust air drawn off during the first period to correspond to the amount of supply air delivered during the second period.

Both the length of each of said two periods and the total length of an operating cycle may be fixed and unvariable. In order, in this case, to permit an adjustment of the ventilation capacity of the apparatus to match different volumes of space 27, the rotary speed of the fans may be adjustable.

All control and operating means of the apparatus may be contained in a control and operating unit 40 mounted at one side of casing 11 and also containing the required electric driving motors for the two fans. By placing the motors of the fans within unit 40, and thus outside duct 12, it is possible in an easy manner to ensure that said duct is screened off from the electromagnetic fields generated by said motors and hereby to prevent said fields from exerting a breakdown action on ions in the air streams passing through duct 12.

In order to prevent the alternating evacuation of exhaust air from and injection of supply air into space 27 from causing any substantial pressure variations within said space, each operating cycle should have a length in the order of about 0.5 to about 2 minutes, preferably 1 minute. If the ventilation capacity of the apparatus, which preferably may be set through an adjustment of the rotary speed of the fans, is selected so as to cause the apparatus to exchange 50% of the air volume contained in the ventilated space per hour, and the length of the operating cycle is 1 minute, the pressure variations in said space caused by the apparatus will have an amplitude corresponding to only 0.83% of the atmospheric pressure.

## Claims

1. Ventilation apparatus for ventilating a limited space within a building through alternately forcedly drawing off a stream of exhaust air from and forcedly delivering a stream of supply air to said space through a conveying duct, common to both said air streams and containing a regenerative heat exchanger for absorbing thermal energy from one air stream and emitting thermal energy to the other air stream, said ventilation apparatus being arranged to operate in a time-controlled cyclic manner in consecutive short operating cycles, each comprising a first period for drawing off exhaust air from said space and a second period for delivering supply air to said space, said ventilation apparatus comprising two fans, which are arranged each to generate one of said two air streams, and flap valve means for bringing the common conveying duct to communicate with the ventilated space alternately via a separate suction opening for exhaust air and a separate injection opening for supply air, said two openings being directed in mutually diverging directions, characterized in that,in order to enable the ventilation apparatus, during each operating cycle, to deliver to said space an amount of supply air, corresponding to the amount of exhaust air drawn off from the space during the same operating cycle, said two fans consist of two alternately operating mutually equal drum fans (13, 14), said fans being placed each on one side of said heat exchanger (15, 16) with their suction sides turned towards the common conveying duct (12), and in that said flap valve means (30) are controlled by at least one of said two air streams.

2. Ventilation apparatus according to claim 1, characterized in that each operating cycle has a length of about 0.5 to about 2 minutes, preferably about 1 minute.

3. Ventilation apparatus according to claim 1 or 2, characterized in that said heat exchanger (15, 16) comprises means (16a) having a high moisture absorption capacity for absorbing moisture from one air stream and emitting moisture to the other air stream.

4. Ventilation apparatus according to any of the preceding claims, characterized in that it comprises means (17) for controllably heating the supply air stream, placed after the heat exchanger (15, 16) as seen in the direction of flow of the supply air stream.

5. Ventilation apparatus according to claim 4, characterized in that the suction opening (28) for exhaust air is directed in a generally upward and forward direction, while the injection opening (29) for supply air is directed in a generally downward and forward direction.

6. Ventilation apparatus according to any of the preceding claims, characterized in that the common conveying duct (12) is provided with an access opening (38) to the interior of said duct (12), located in a wall of said duct and normally closed by means of a door (36).

## Patentansprüche

1. Belüftungseinrichtung zum Belüften eines begrenzten Raumes in einem Gebäude durch abwechselndes zwangsweises Abführen eines Abluftstromes aus diesem Raum und zwangsweises Zuführen eines Zuluftstromes zu diesem Raum durch einen Förderkanal, der diesen beiden Luftströmen gemeinsam ist und einen regenerativen Wärmetauscher enthält, um Wärmeenergie aus dem einen Luftstrom zu absorbieren und Wärmeenergie an den anderen Luftstrom abzugeben, wobei diese Belüftungseinrichtung so ausgebildet ist, daß sie auf eine zeitgesteuerte zyklische Weise in kurzen aufeinanderfolgenden Betriebszyklen arbeitet, die jeweils eine erste Periode zum Abführen von Abluft aus dem Raum und eine zweite Periode zum Zuführen von Zuluft zu dem Raum umfassen, wobei die Belüftungseinrichtung zwei Gebläse umfaßt, die jeweils so ausgebildet sind, daß sie einen der besagten beiden Luftströme erzeugen, und Klappenventilmittel umfaßt, um den gemeinsamen Förderkanal abwechselnd über eine gesonderte Ansaugöffnung für die Abluft und eine gesonderte Ausstoßöffnung für die Zuluft mit dem belüfteten Raum zu verbinden, wobei diese beiden Öffnungen in divergierende Richtungen weisen, dadurch **gekennzeichnet**, daß die beiden Gebläse aus abwechselnd arbeitenden identischen Trommelgebläsen (13, 14) bestehen, wobei diese Gebläse jeweils auf einer Seite des Wärmetauschers (15, 16) angeordnet und mit ihrer Saugseite dem gemeinsamen Förderkanal (12) zugekehrt sind, damit die Belüftungseinrichtung während jedes Arbeitszyklus dem Raum eine Zuluftmenge zuführen kann, die der Abluftmenge entspricht, die während des gleichen Arbeitszyklus aus dem Raum abgeführt wird, und daß die Klappenventilmittel (30) durch mindestens einen der besagten beiden Luftströme gesteuert sind.

2. Belüftungseinrichtung nach Anspruch 1, dadurch **gekennzeichnet,** daß jeder Arbeitszyklus eine Dauer von ungefähr 0,5 bis 2 Minuten, vorzugsweise ungefähr 1 Minute hat.

3. Belüftungseinrichtung nach Anspruch 1 oder 2, dadurch **gekennzeichnet**, daß der Wärmetauscher (15, 16) Mittel (16a) mit einer hohen Feuchtigkeits-Absorbtionsfähigkeit umfaßt, um Feuchtigkeit aus dem einen Luftstrom zu absorbieren und Feuchtigkeit an den anderen Luftstrom abzugeben.

4. Belüftungseinrichtung nach einem der vorhergehenden Ansprüche, **gekennzeichnet** durch Mittel (17) zum gesteuerten Erhitzen des Zuluftstromes, die in Strömungsrichtung des Zuluftstromes gesehen hinter dem Wärmetauscher (15, 16) angeordnet sind.

5. Belüftungseinrichtung nach Anspruch 4, dadurch **gekennzeichnet,** daß die Saugöffnung (28) für die Abluft im allgemeinen nach oben und nach vorne gerichtet ist, während die Ausstoßöffnung (29) für die Zuluft im allgemeinen nach unten und nach vorne gerichtet ist.

6. Belüftungseinrichtung nach einem der vorhergehenden Ansprüche, dadurch **gekennzeichnet,** daß der gemeinsame Förderkanal (12) mit einer Öffnung (38) für den Zugang zum Inneren dieses Kanals (12) versehen ist, die in einer Wand dieses Kanals angeordnet und normalerweise mit einer Tür (36) verschlossen ist.

## Revendications

1. Appareil de ventilation d'un espace limité à l'intérieur d'un bâtiment par aspiration forcée d'un courant d'air évacué dudit espace et transmission forcée d'un courant d'air d'alimentation audit espace par un conduit de transport, en alternance, le conduit de transport étant commun aux deux courants d'air et contenant un échangeur de chaleur à récupération destiné à absorber l'énergie thermique d'un premier courant d'air et à transmettre l'énergie thermique à l'autre courant d'air, l'appareil de ventilation étant monté pour fonctionner de manière cyclique réglée en fonction du temps avec de courts cycles consécutifs de fonctionnement comprenant chacun une première période d'aspiration d'air évacué dudit espace et une seconde période de distribution d'air d'alimentation dans ledit espace, l'appareil de ventilation comprenant deux ventilateurs qui sont destinés chacun à créer un des deux courants d'air, et un dispositif obturateur destiné à mettre en communication le conduit commun d'air avec l'espace ventilé en alternance par une ouverture séparée d'aspiration d'air évacué et une ouverture séparée d'injection d'air d'alimentation, les deux ouvertures ayant des directions divergentes, caractérisé en ce que, pour que l'appareil de ventilation puisse transmettre audit espace une quantité d'air d'alimentation correspondant à la quantité d'air évacué aspiré après ledit espace pendant le même cycle de fonctionnement, à chaque cycle de fonctionnement, les deux ventilateurs comprennent deux ventilateurs à tambours pratiquement équivalents (13, 14) qui travaillent en alternance, les ventilateurs étant placés de part et d'autre de l'échangeur de chaleur (15, 16), un côté d'aspiration étant tourné vers le conduit commun de transport (12), et en ce que le dispositif obturateur (30) est commandé par l'un au moins des deux courants d'air.

2. Appareil de ventilation selon la revendication 1, caractérisé en ce que chaque cycle de fonctionnement a une durée d'environ 0,5 à 2 min et de préférence d'environ 1 min.

3. Appareil de ventilation selon la revendication 1 ou 2, caractérisé en ce que l'échangeur de chaleur (15, 16) comporte un dispositif (16a) ayant une capacité élevée d'absorption d'humidité destiné à absorber l'humidité d'un premier courant d'air et à transmettre l'humidité à l'autre courant d'air.

4. Appareil de ventilation selon l'une quelconque des revendications précédentes, caractérisé en ce qu'il comprend un dispositif (17) de chauffage réglé du courant d'air d'alimentation, placé après l'échangeur de chaleur (15, 16) dans la direction de circulation du courant d'air d'alimentation.

5. Appareil de ventilation selon la revendication 4, caractérisé en ce que l'ouverture d'aspiration (28) d'air évacué est dirigée de façon générale vers le haut et vers l'avant alors que l'ouverture d'injection (29) de l'air d'alimentation est dirigée de façon générale vers le bas et vers l'avant.

6. Appareil de ventilation selon l'une quelconque des revendications précédentes, caractérisé en ce que le conduit commun de transport (12) a une ouverture d'accès (38) à l'intérieur du conduit (12), placée dans une paroi du conduit et normalement fermée par une porte (36).
